# FASCICULE DE BREVET EUROPEEN

(11) **EP 2 388 491 B1**
(45) Date de publication et mention de la délivrance du brevet: **06.03.2013**
(21) Numéro de dépôt: 11162494.6
(22) Date de dépôt: 14.04.2011
(51) Int. Cl.: F16D 43/08

(54) **Dispositif à hystérésis d'accouplement entre un arbre et une poulie et bloc moteur comprenant un tel dispositif**
Hysteresisvorrichtung um eine Welle und eine Rolle zu koppeln und Motorblock mit einer solchen Vorrichtung
Hysteresis device to clutch a shaft and a pulley and motor bloc with such a device

(30) Priorité: 19.05.2010 FR 1053868
(43) Date de publication de la demande: 23.11.2011
(73) Titulaire: Peugeot Citroën Automobiles SA, 78140 Vélizy-Villacoublay (FR)
(72) Inventeur: Berger, Julien, 75005 Paris (FR); Giannoni, Marc, 75009 Paris (FR); le Lièvre, Armel, 78360 Montesson (FR); Wascheul, Michaël, 78260 Achères (FR)

(56) Documents cités:
- EP-A2- 1 847 412
- CH-A- 340 419
- DE-B- 1 024 294
- FR-A- 1 104 957
- FR-A- 1 146 690
- FR-A- 1 196 672
- FR-A- 1 265 099
- GB-A- 270 080
- US-A- 2 107 341
- US-A- 5 441 137
- US-A- 5 638 935
- US-A1- 2007 296 295

## Description

L'invention concerne un dispositif d'accouplement entre un arbre et une poulie ainsi qu'un bloc moteur pouvant équiper un véhicule automobile et comprenant le dispositif d'accouplement.

Les véhicules automobiles comprennent généralement plusieurs accessoires nécessitant un apport énergétique pour leur fonctionnement. L'énergie peut être apportée par le réseau électrique du véhicule ou directement par la motorisation du véhicule en amont de la boite de vitesse. A titre d'exemple, le moteur thermique du véhicule peut entraîner un groupe de climatisation par l'intermédiaire d'une courroie souvent appelée courroie d'accessoires. Le groupe de climatisation comprend généralement un compresseur à piston entrainé par la rotation d'un arbre. L'apport d'énergie mécanique du moteur thermique à l'arbre du groupe de climatisation permet d'éviter l'utilisation d'un moteur électrique dédié à l'entraînement du groupe de climatisation.

Par ailleurs, la courroie d'accessoires associée au moteur thermique entraine généralement une machine électrique utilisée comme alternateur permettant la fourniture d'énergie au réseau électrique du véhicule. Cette machine électrique peut être réversible et, dans ce cas, elle est utilisée pour démarrer le moteur thermique. Cette machine est alors appelée alternateur réversible.

On cherche de plus en plus à limiter la consommation de carburant fossile dans les véhicules automobiles. A cet effet, on développé des véhicules hybrides mettant en oeuvre une double motorisation, comme par exemple un moteur thermique et un moteur électrique alimenté par des batteries équipant le véhicule. Le moteur électrique est utilisé tant que la charge des batteries le permet. Cette double motorisation pose un problème pour l'apport énergétique aux accessoires tel que le groupe de climatisation lorsque ceux-ci sont entrainés par la courroie d'accessoires. En effet, l'entraînement par courroie ne peut se faire que si le moteur thermique est en fonctionnement. Le groupe de climatisation se trouve donc à l'arrêt lorsque le véhicule hybride est propulsé par son moteur électrique.

La demanderesse a cherché à entraîner le compresseur de climatisation par l'alternateur réversible lorsque le moteur thermique est à l'arrêt en plaçant une poulie débrayable sur le vilebrequin du moteur thermique, la courroie d'accessoires étant montée sur cette poulie qui permet d'interdire l'entraînement du moteur thermique par la poulie lorsque celle-ci tourne à une vitesse de rotation inférieure à une vitesse de rotation donnée pour que l'alternateur puisse entraîner le groupe de climatisation. Cette poulie permet l'entraînement du moteur thermique par la poulie lorsque celle-ci tourne à une vitesse de rotation supérieure à la vitesse de rotation donnée pour permettre le démarrage du moteur thermique. Cette poulie comprend un embrayage centrifuge actionné par plusieurs masselottes pouvant se déplacer radialement par rapport à l'axe du vilebrequin lors de la rotation de la poulie et générant un effort d'accouplement de l'embrayage.

Le document FR1196672 présente une poulie débrayable particulière, permettant l'obtention d'une vitesse d'embrayage, c'est-à-dire d'accouplement, qui varie non linéairement.

Cependant afin de limiter l'usure du système et d'assurer au mieux certaines fonctions, la demanderesse a constaté la nécessité de mettre au point un dispositif permettant de dissocier les régimes d'embrayage et de débrayage de la poulie.

Un tel dispositif permet notamment d'avoir un régime de rotation maximal de la poulie débrayée supérieur au régime de ralenti du moteur équipé, tout en permettant de maintenir la poulie accouplée au vilebrequin lorsque le moteur revient à son régime de ralenti.

L'invention a donc pour objet un dispositif d'accouplement entre un arbre et une poulie pouvant tourner l'un par rapport à l'autre autour d'un axe, la poulie étant située autour de l'arbre, comprenant des moyens débrayables d'entraînement de l'arbre par la poulie permettant l'entrainement ou non de l'arbre par la poulie selon la vitesse de rotation de cette dernière, les moyens débrayables d'entraînement comprenant :
- un embrayage permettant l'accouplement de l'arbre par rapport à la poulie sous l'effet d'un effort d'accouplement,
- plusieurs masses inertielles pouvant se déplacer radialement par rapport à l'axe (15) lors de la rotation de la poulie et générant l'effort d'accouplement,
caractérisé en ce que les moyens débrayables d'entraînement comprennent en outre des moyens de génération d'hystérésis dans le couplage et le découplage de l'embrayage, de sorte que la vitesse prédéfinie de rotation d'accouplement est différente de la vitesse prédéfinie de rotation de désaccouplement.

Selon un premier mode de réalisation, les moyens de génération d'hystérésis comportent un aimant permanent par masse inertielle, lesdits aimants étant disposés de sorte à ramener les masses inertielles vers l'arbre.

Dans une variante, les aimants permanents sont solidaires de la poulie, les masses inertielles comportant un matériau ferromagnétique.

Dans une autre variante, les aimants permanent sont solidaires des masses inertielles, un élément ferromagnétique étant disposé à proximité d'un moyeu de la poulie.

Selon un autre mode de réalisation, les moyens de génération d'hystérésis comportent au moins un électroaimant, disposé de sorte à ramener les masses inertielles vers l'arbre lorsqu'ils sont activés.

Dans une variante, au moins un électroaimant est disposé de sorte à agir sur les masses inertielles comportant un matériau ferromagnétique.

Dans une autre variante, au moins un électroaimant est disposé de sorte à agir sur un plateau pousseur intercalé entre les masses inertielles et l'embrayage, ledit plateau pousseur comportant un matériau ferromagnétique.

Selon un autre mode de réalisation, les moyens de génération d'hystérésis comportent un épaulement réalisé sur les masses inertielles, l'épaulement prenant appui sur un épaulement correspondant d'un élément de la poulie, de sorte à générer une force de rappel des masses vers l'arbre au cours d'un déplacement radial des masses inertielles.

Dans une variante dans laquelle l'effort d'accouplement est axial et transmis des masses inertielles vers l'embrayage au moyen d'un plateau pousseur, les moyens de génération d'hystérésis comportent un épaulement réalisé sur les masses inertielles, l'épaulement prenant appui sur un épaulement correspondant du plateau pousseur de sorte à générer une force de rappel des masses vers l'arbre au cours d'un déplacement radial des masses inertielles.

Selon un mode de réalisation préférentiel de l'invention, l'embrayage est conique.

De préférence, l'embrayage comprend plusieurs cônes de friction répartis en deux ensembles alternés un premier ensemble étant lié en rotation à la poulie et un second ensemble étant lié en rotation à l'arbre.

L'invention a également pour objet un bloc moteur pouvant équiper un véhicule automobile et comprenant un moteur thermique, un alternateur réversible permettant le démarrage du moteur thermique et la génération d'énergie électrique, un accessoire, comme par exemple un groupe de climatisation, le moteur thermique et l'alternateur réversible pouvant entraîner l'accessoire en rotation au moyen d'une courroie. Le bloc moteur comprend un dispositif d'accouplement selon l'invention entre un arbre de sortie du moteur thermique et une poulie entrainée par la courroie.

L'invention sera mieux comprise et d'autres avantages apparaîtront à la lecture de la description détaillée de modes de réalisation donnés à titre d'exemple, description illustrée par les dessins joints dans lequel :

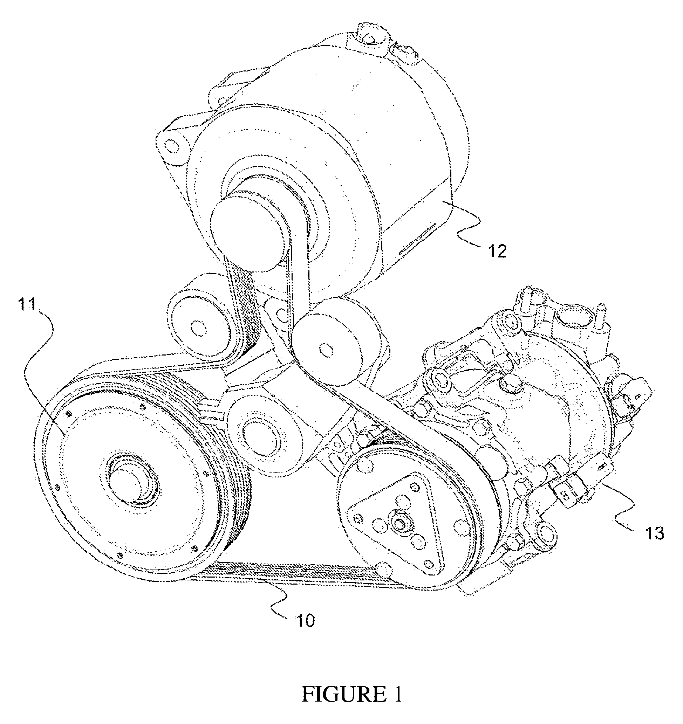

- la figure 1 représente la courroie d'accessoires d'un véhicule automobile et plusieurs éléments reliés par cette courroie ;

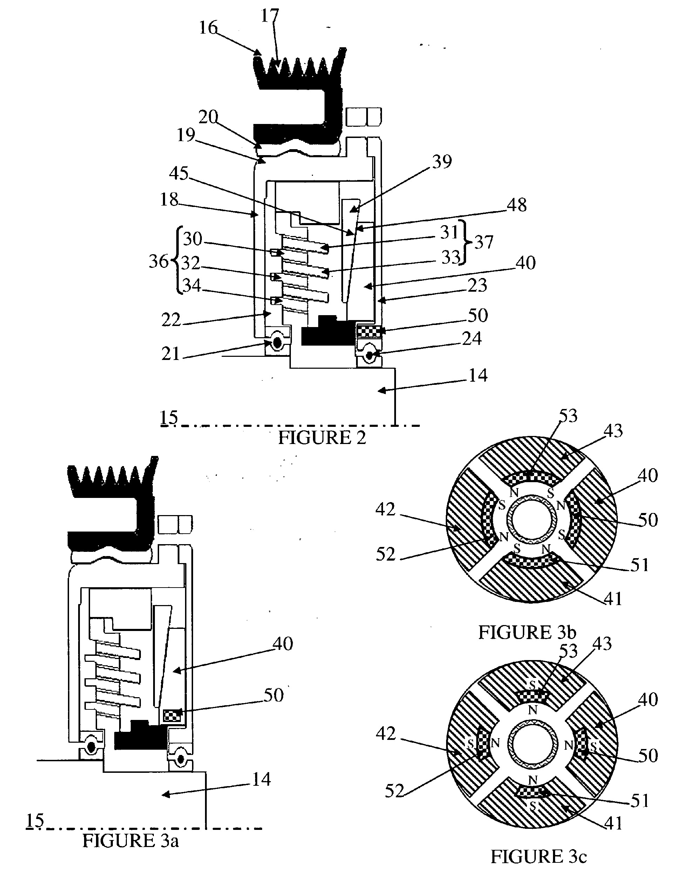

- La figure 2 représente en coupe un dispositif d'accouplement débrayable entre une poulie entrainée par la courroie d'accessoires et un arbre selon un premier mode de réalisation de l'invention ; la figure 2 est coupée dans un plan contenant l'axe de la poulie, et seule une demie poulie est représentée;
- la figure 3a représente en coupe un dispositif d'accouplement débrayable entre une poulie entrainée par la courroie d'accessoires et un arbre selon un deuxième mode de réalisation de l'invention ; la figure 3a est coupée dans un plan contenant l'axe de la poulie, et seule une demie poulie est représentée ; les figure 3b et 3c sont une représentation schématique des masses inertielles mises en jeu dans deux variantes de l'invention correspondant au mode de réalisation de la figure 3a, dans leur environnement d'utilisation ;

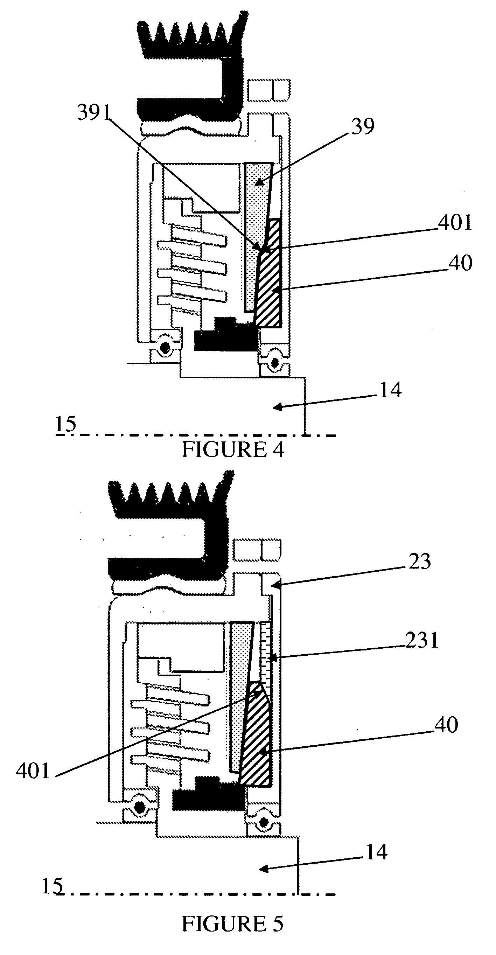

- La figure 4 représente en coupe un dispositif d'accouplement débrayable entre une poulie entrainée par la courroie d'accessoires et un arbre selon un troisième mode de réalisation de l'invention ; la figure 4 est coupée dans un plan contenant l'axe de la poulie, et seule une demie poulie est représentée;
- La figure 5 représente en coupe un dispositif d'accouplement débrayable entre une poulie entrainée par la courroie d'accessoires et un arbre selon une variante de l'invention ; la figure 5 est coupée dans un plan contenant l'axe de la poulie, et seule une demie poulie est représentée;

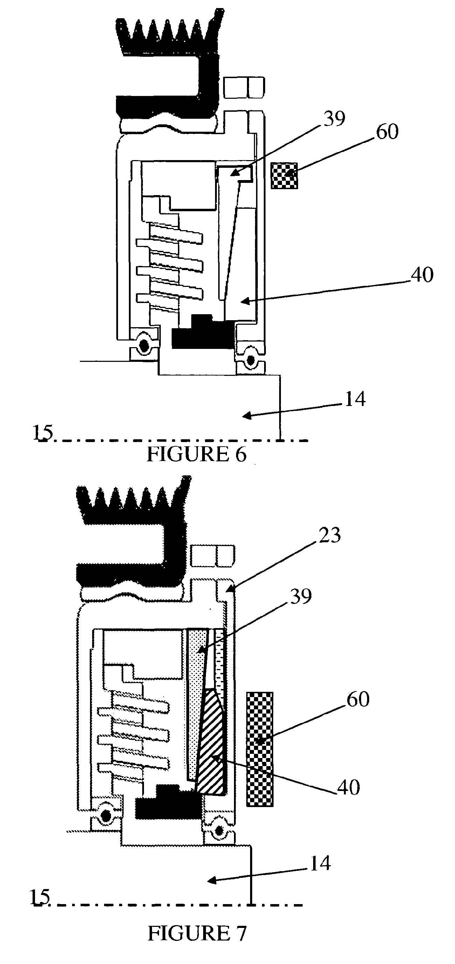

- La figure 6 représente en coupe un dispositif d'accouplement débrayable entre une poulie entrainée par la courroie d'accessoires et un arbre selon un quatrième mode de réalisation de l'invention ; la figure 6 est coupée dans un plan contenant l'axe de la poulie, et seule une demie poulie est représentée ;
- La figure 7 représentent en coupe un dispositif d'accouplement débrayable entre une poulie entrainée par la courroie d'accessoires et un arbre selon une variante de l'invention ; la figure 7 est coupée dans un plan contenant l'axe de la poulie, et seule une demie poulie est représentée ;

La figure 1 représente une courroie d'accessoires 10 d'un véhicule automobile et plusieurs éléments reliés par la courroie 10. Le véhicule automobile comprend un moteur thermique et une poulie 11 disposée en bout de vilebrequin du moteur thermique. Parmi les éléments entrainés par la courroie 10, un alternateur réversible 12 et un groupe de climatisation 13 sont représentés sur la figure 1. Il est bien entendu que d'autres accessoires peuvent être entrainés par la courroie 10.

De façon classique, l'alternateur réversible 12 peut être utilisé comme démarreur pour lancer le moteur thermique ou comme alternateur pour alimenter un réseau électrique du véhicule. Pour ces deux utilisations, l'alternateur réversible 12 et le moteur thermique sont accouplés en permanence. A cet effet, la poulie 11 est simplement solidaire du vilebrequin.

L'invention permet une autre utilisation de l'alternateur réversible 12 pour transmettre une puissance mécanique par la courroie 10 même lorsque le moteur thermique est à l'arrêt. A cet effet, la poulie 11 est débrayable.

La figure 2 représente en coupe, un dispositif d'accouplement de la poulie 11. Cette figure permet de visualiser des moyens autonomes et débrayables d'entraînement du vilebrequin par la courroie 10. Une extrémité libre du vilebrequin forme un arbre 14 mobile en rotation autour d'un axe 15. La poulie 11 peut soit tourner librement par rapport à l'arbre 14 soit être solidaire de celui-ci. L'invention prévoit des moyens débrayables d'entraînement de l'arbre 14 par la poulie 11. La liaison en rotation entre la poulie 11 et l'arbre 14 est obtenue pour une vitesse de rotation de la poulie 11 autour de l'axe 15 supérieure à une vitesse donnée. En dessous de cette vitesse, la poulie 11 ne s'accouple pas par rapport à l'arbre 14. On peut alimenter l'alternateur réversible 12 pour qu'il entraine la poulie 11 par l'intermédiaire de la courroie 10 à une vitesse supérieure à la vitesse donnée et obtenir ainsi le démarrage du moteur thermique. On peut aussi alimenter l'alternateur réversible 12 de telle sorte que la vitesse de rotation de la poulie 11 soit inférieure à la vitesse donnée pour conserver la poulie 11 libre en rotation par rapport l'arbre 14 et ne pas démarrer le moteur thermique. Aucune action extérieure n'est nécessaire pour obtenir l'accouplement ou le désaccouplement de l'arbre 14 et de la poulie 11. La seule rotation de la poulie 11 permet l'accouplement ou le désaccouplement. La vitesse de rotation donnée est par exemple de 1500 tours par minute (soit 167 radians par seconde en unité du système international). En revanche, au dessus de cette vitesse, le vilebrequin et la poulie deviennent solidaires.

Dans l'invention, le dispositif mis en jeu présente une certaine hystérésis, de sorte que, selon les conditions de fonctionnement, la vitesse d'accouplement de la poulie 11 à l'arbre 14 peut être sensiblement différente de la vitesse de désaccouplement. Dans l'invention, une seconde vitesse de rotation prédéterminée entraine le désaccouplement de la poulie 11 par rapport à l'arbre 14.

La poulie 11 comprend une surface de révolution 16 destinée à recevoir la courroie 10. Pour augmenter l'énergie mécanique transmissible entre la courroie 10 et la poulie 11, la courroie 10 est avantageusement striée et la surface de révolution 16 comprend plusieurs gorges 17 conformées pour recevoir les stries de la courroie 10. La poulie 11 comprend une jante 18 dont une partie périphérique extérieure 19 est solidaire de la surface 16. On peut disposer entre la partie périphérique extérieure 19 et la surface 16 une cale élastique 20 permettant de filtrer d'éventuels asynchronismes dans la rotation de la poulie 11 ou dans la rotation de l'arbre 14. Un roulement 21 relie une partie centrale 22 de la jante 18 et l'arbre 14. La jante 18 forme une première face latérale de la poulie 11. Une seconde face latérale de la poulie 11 peut être formée par une plaque de fermeture 23 solidaire de la partie périphérique extérieure 19. Un second roulement 24 relie la plaque de fermeture 23 et l'arbre 14. Les deux roulements 21 et 24 forment un palier permettant la rotation de la poulie 11 par rapport l'arbre 14 autour de l'axe 15.

Les moyens autonomes et débrayables d'entraînement de l'arbre 14 par la poulie 11 sont logés dans un espace situé entre la jante 18 et la plaque de fermeture 23. Cet espace est limité radialement par la partie périphérique extérieure 19 de la jante 18. Les moyens autonomes et débrayables d'entraînement comprennent un embrayage permettant l'accouplement de l'arbre 14 par rapport à la poulie 11. L'embrayage est par exemple conique et comprend plusieurs cônes de friction 30 à 34 répartis en deux ensembles alternés. Un premier ensemble 36 comprenant les cônes 30, 32 et 34 est lié en rotation de la jante 18 et un second ensemble 37 comprenant les cônes 31 et 33 est lié en rotation à l'arbre 14 par l'intermédiaire d'un moyeu 38 solidaire de l'arbre 14 et d'un plateau pousseur 39 permettant la liaison en rotation de l'ensemble 37 par rapport à l'arbre 14 autour de l'axe 15, tout en laissant subsister un degré de liberté en translation suivant l'axe 15. Ce degré de liberté en translation permet aux deux ensembles 36 et 37 de venir en pression l'un contre l'autre afin d'assurer une transmission de puissance entre l'arbre 14 et la poulie 11. Afin d'assurer un coefficient de frottement élevé entre les deux ensembles 36 et 37, les cônes 30 à 34 peuvent être réalisés ou revêtus de carbone.

Les moyens autonomes et débrayables d'entraînement comprennent plusieurs masses inertielles pouvant se déplacer radialement par rapport à l'axe 15 lors de la rotation de la poulie 11. Dans l'exemple représenté, le dispositif comporte quatre masses inertielles (ou masselottes) 40 à 43. Les masses 40 à 43 sont réparties radialement autour de l'axe 13. Les masses inertielles 40 à 43 sont entrainées en rotation par la poulie 11 par l'intermédiaire de la plaque de fermeture 23 autour de l'axe 15. Lors de la rotation de la poulie 11, les masses 40 à 43 se déplacent en translation radialement par rapport à l'axe 15 jusqu'à venir au contact d'un plan 45 de révolution autour de l'axe 15 et appartenant au plateau pousseur 39. Les masses 40 à 43 sont toutes sensiblement identiques, à leurs tolérances de réalisation près. Elles se déplacent sensiblement simultanément sous l'effet de la rotation de la poulie 11. Le plateau pousseur 39 est libre translation suivant l'axe 15. Le plateau pousseur 39 est guidé dans son mouvement par la partie périphérique extérieure 19 de la jante 18. Le plan 45 forme une surface conique sur laquelle prend appui une autre surface conique 48 appartenant à chacune des masses inertielles 40 à 43. Cet appui entre les deux surfaces coniques 45 et 48 permet de transformer l'effort radial que les masses 40 à 43 exercent lors de leur mouvement en effort axial permettant l'accouplement de l'arbre 14 et de la poulie 11.

Le dispositif peut comprendre un ressort de rappel, non représenté et s'opposant à l'effort axial pour maintenir l'embrayage désaccouplé lorsque la vitesse de rotation de la poulie 11 est inférieure à la vitesse de rotation donnée.

Le plateau pousseur 39 comprend une surface conique 49 destinée à prendre appui contre le cône de friction 34. Lorsque l'effort exercé par les masses inertielles 40 à 43 sur le plateau conique 45 est suffisant pour comprimer le ressort les cônes de friction 30 à 34 viennent en pression les uns contre les autres de façon à accoupler la poulie 11 et l'arbre 14.

Selon le premier mode de réalisation de l'invention présenté en figure 2, un aimant permanent 50 est disposé solidairement du tambour de la poulie (constitué essentiellement de la jante 18 et de la plaque de fermeture 23, ainsi que des éléments solidaires de ces pièces). Un élément permanent peut être disposé par masselotte.

Un système, par exemple un ressort, va exercer une force permanente sur le plateau pousseur 39 de manière à ramener les masses inertielles 40 à 44 vers le centre de la poulie lorsque que le régime de rotation de la poulie descend en dessous d'un premier régime prédéfini. La poulie sera alors désolidarisée de l'arbre 14.

Selon un autre mode de réalisation non représenté, un ressort est directement lié aux masselottes afin de les ramener vers l'arbre 14.

L'aimant permanent 50 retient les masselottes au centre de la poulie jusqu'à un second régime prédéfini, supérieur au premier régime prédéfini, car les forces électromagnétiques évoluent avec le cube de la distance de l'entrefer. L'aimant permanent 50 est choisi de sorte que la force électromagnétique soit suffisante pour maintenir les masselottes au centre de la poulie lorsque le régime de rotation est compris entre le premier et le second régime de rotation prédéfini, mais est insuffisante pour attirer ces mêmes masselottes lorsque celles-ci seront centrifugées.

Selon un deuxième mode de réalisation représenté en figure 3a, l'aimant permanent 50 est disposé solidairement d'une première masse inertielle 40. Selon deux variantes de ce mode de réalisation représentées schématiquement respectivement aux figures 3a et 3b, on dispose un aimant permanent 50, 51, 52, 53 par masse inertielle 40, 41, 42, 43.

On a schématiquement représenté aux figures 3a et 3b les masses inertielles 40 à 43, dans une position écartée de leur moyeu, pouvant être constitué par la bague extérieure du roulement second roulement 24.

Dans la première variante représentée en figure 3a, les aimants permanents sont disposés et conformés de sorte à s'attirer mutuellement. Les pôles magnétiques des aimants ont été schématisé en figure 3a sur les aimants, avec la notation « N » pour le pôle nord de l'aimant considéré, et « S » pour le pôle sud. Les aimants disposés sur chaque masse inertielle s'étendent sur toute ou quasiment toute la circonférence intérieure des masses inertielles. L'attraction mutuelle des aimants tend à maintenir les masses rapprochées les unes des autres autour du moyeu. Le moyeu peut comporter ou être constitué d'un matériau ferromagnétique de sorte à améliorer l'attraction des masses inertielles vers l'axe de rotation.

Dans la seconde variante représentée en figure 3b, les aimants permanents 50 à 53 sont de plus petite largeur et sont disposés au voisinage de surface intérieure des masses inertielle 40 à 43, c'est-à-dire au voisinage de la surface des masses la plus proche de l'axe de l'arbre 14. On dispose alors un moyen central comportant ou étant constitué d'un matériau ferromagnétique, de sorte que les aimants, liés aux masses inertielles, provoquent une attraction de ces dernières vers le moyeu.

Dans la première ou la seconde variante, les aimants ainsi employés créent une attraction magnétique générant une hystérésis dans le dispositif, et jouent également un rôle de rappel des masses inertielles vers la position centrale. Il est ainsi possible, selon l'application considérée, de se passer de ressort de rappel des masses inertielles, ou à tout le moins de réduire le dimensionnement de ce dernier.

Le mode de réalisation schématisé en figure 3, que ce soit dans la variante prévue en figure 3a ou en figure 3b, offre en outre l'avantage que la masse des aimants participe à l'effort inertiel qui s'exerce sur les masselottes.

La figure 4 présente schématiquement un troisième mode de réalisation de l'invention. Dans cette variante, une forme particulière de la masse inertielle 40 et du plateau pousseur 39 permet de générer l'hystérésis recherchée dans l'invention.

En position centrale, les masses inertielles étant regroupées à proximité de l'arbre 14, la force centrifuge exercée sur la masse inertielle 40 doit être supérieure à la force de rappel vers l'arbre 14 exercée sur ladite masse inertielle, augmentée de la force du plateau pousseur 39 exercée sur un premier épaulement 401 de la masselotte 40 par un second épaulement correspondant du plateau pousseur 391 (pondérée par le sinus de l'angle de décrochement présenté par l'épaulement, afin d'obtenir la composante, selon l'axe de déplacement radial de la masse inertielle, de cette force exercée sur l'épaulement), afin que la masse inertielle 50 s'écarte de sa position initiale.

Lorsque la masse inertielle 40 est éloignée de l'arbre 14, le premier et le second épaulement ne sont plus en interaction, de sorte qu'il n'y a plus de force additionnelle s'ajoutant à la force de rappel s'exerçant sur la masse inertielle (par exemple du fait d'un ressort de rappel).

Le premier régime de rotation prédéfini, auquel les masselottes sont ramenées à leur position initiale rapprochée de l'arbre 14 est donc inférieur au second régime de rotation prédéfini, nécessaire pour écarter les masses inertielles de cette position initiale.

Dans une variante de ce mode de réalisation présentée en figure 5, le premier épaulement 401 est ménagé sur une face de la masse inertielle 40 au voisinage de la plaque de fermeture 23, le second épaulement correspondant étant alors ménagé sur la plaque de fermeture, de fonderie ou via une entretoise 231.

Selon un quatrième mode de réalisation de l'invention présenté en figure 6, un électro-aimant 60 est disposé à l'extérieur de la poulie 11, par exemple sur le bloc moteur. L'activation de l'électro-aimant attire (respectivement repousse) le plateau pousseur (réalisé dans un matériau ferromagnétique ou comportant un tel matériau) vers l'électroaimant 60, et donc dans la variante l'invention ici représentée repousse (respectivement permet l'écartement de) la masse inertielle 40 vers l'arbre 14.

Par l'utilisation d'un électroaimant et de moyens de pilotages adaptés pour l'alimentation du l'électroaimant, on peut créer une variabilité dans le dispositif, et notamment piloter le second régime prédéfini d'écartement des masse inertielles, voire le premier régime prédéfini de retour des masse à proximité de l'arbre 14.

Selon une variante de ce quatrième mode de réalisation, présentée en figure 7, on dispose l'électroaimant 60 de sorte à ce qu'il agisse sur les masse inertielles en regard desquelles il est positionné, les masses inertielles comportant un matériau ferromagnétique ou constituées d'un tel matériau.

Cette disposition, couplée à une architecture présentant un épaulement sur la plaque de fermeture 23, permet le pilotage de la force de rappel des masses inertielles vers l'arbre 14.

Le dispositif développé dans l'invention permet ainsi de dissocier les vitesses d'embrayage et de débrayage d'un embrayage centrifuge. Selon les variantes considérées, l'invention permet en outre de supprimer le ressort (ou autre système) de rappel des masses inertielles de l'embrayage centrifuge, ou d'en réduire le dimensionnement. L'invention trouve son application préférentielle dans les moteurs à combustion dotés d'un alternateur réversible, au niveau de la poulie disposée en sortie d'arbre moteur, afin de pouvoir assurer l'entrainement des accessoires liés au moteur (par exemple un système de climatisation) par le moteur lors de son fonctionnement, ou par l'alternateur réversible lors de l'arrêt du moteur, tout en permettant le redémarrage du moteur par l'alternateur réversible.

## Revendications

1. Dispositif d'accouplement entre un arbre (14) et une poulie (11) pouvant tourner l'un par rapport à l'autre autour d'un axe (15), la poulie (11) étant située autour de l'arbre (14), comprenant des moyens débrayables (36, 37, 38, 39, 40, 41, 42, 43) d'entraînement de l'arbre (14) par la poulie (11) permettant l'entrainement ou non de l'arbre (14) par la poulie (11) selon la vitesse de rotation de cette dernière, les moyens débrayables d'entraînement comprenant :
• un embrayage (36, 37) permettant l'accouplement de l'arbre (14) par rapport à la poulie (11) sous l'effet d'un effort d'accouplement,
• plusieurs masses inertielles (40, 41, 42, 43) pouvant se déplacer radialement par rapport à l'axe (15) lors de la rotation de la poulie (11) et générant l'effort d'accouplement,
**caractérisé en ce que** les moyens débrayables d'entraînement comprennent en outre des moyens de génération d'hystérésis dans le couplage et le découplage de l'embrayage, de sorte que la vitesse prédéfinie de rotation d'accouplement est différente de la vitesse prédéfinie de rotation de désaccouplement.

2. Dispositif d'accouplement selon la revendication 1, **caractérisé en ce que** les moyens de génération d'hystérésis comportent un aimant permanent par masse inertielle, lesdits aimants étant disposés de sorte à ramener les masses inertielles vers l'arbre 14

3. Dispositif selon la revendication 2, **caractérisé en ce que** les aimants permanents sont solidaires de la poulie (11), les masse inertielles comportant un matériau ferromagnétique.

4. Dispositif selon la revendication 2, **caractérisé en ce que** les aimants permanent sont solidaires des masses inertielles, un élément ferromagnétique étant disposé à proximité d'un moyeu de la poulie 11.

5. Dispositif selon la revendication 1, **caractérisé en ce que** les moyens de génération d'hystérésis comportent au moins un électroaimant, disposé de sorte à ramener les masses inertielles vers l'arbre (14) lorsqu'ils sont activés.

6. Dispositif selon la revendication 5, **caractérisé en ce qu'**il comporte au moins un électroaimant disposé de sorte à agir sur les masses inertielles (40, 41, 42, 43) comportant un matériau ferromagnétique.

7. Dispositif selon la revendication 5 **caractérisé en ce qu'**il comporte au moins un électroaimant disposé de sorte à agir sur un plateau pousseur (39) intercalé entre les masses inertielles et l'embrayage, ledit plateau pousseur (39) comportant un matériau ferromagnétique.

8. Dispositif selon la revendication 1, **caractérisé en ce que** les moyens de génération d'hystérésis comportent un premier épaulement (401) réalisé sur les masses inertielles (40, 41, 42, 43), le premier épaulement (401) prenant appui sur un second épaulement correspondant d'un élément de la poulie (11), de sorte à générer une force de rappel des masses vers l'arbre (14) au cours d'un déplacement radial des masses inertielles (40, 41, 42, 43).

9. Dispositif selon la revendication 1, dans lequel l'effort d'accouplement est axial et transmis des masses inertielles (40, 41, 42, 43) vers l'embrayage (36, 37) au moyen d'un plateau pousseur (39), **caractérisé en ce que** les moyens de génération d'hystérésis comportent un premier épaulement (401) réalisé sur les masses inertielles (40, 41, 42, 43), le premier épaulement (401) prenant appui sur un second épaulement correspondant du plateau pousseur (391) de sorte à générer une force de rappel des masses vers l'arbre (14) au cours d'un déplacement radial des masses inertielles (40, 41, 42, 43).

10. Dispositif d'accouplement selon l'une des revendications précédentes, **caractérisé en ce que** l'embrayage (36, 37) est conique.

11. Dispositif d'accouplement selon la revendication 10, **caractérisé en ce que** l'embrayage (36, 37) comprend plusieurs cônes de friction (30 à 35) répartis en deux ensembles alternés (36, 37), un premier ensemble (36) étant lié en rotation à la poulie (11) et un second ensemble (37) étant lié en rotation à l'arbre (14).

12. Bloc moteur pouvant équiper un véhicule automobile et comprenant un moteur thermique, un alternateur réversible (12) permettant le démarrage du moteur thermique et la génération d'énergie électrique, un accessoire (13), le moteur thermique et l'alternateur réversible (12) pouvant entraîner l'accessoire (13) en rotation au moyen d'une courroie (10), **caractérisé en ce qu'**il comprend un dispositif d'accouplement selon l'une des revendications précédente entre un arbre (14) de sortie du moteur thermique et une poulie (11) entrainée par la courroie (10).

13. Bloc moteur selon la revendication 12, **caractérisé en ce que** l'accessoire est un groupe de climatisation (13).

## Claims

1. A coupling device between a shaft (14) and a pulley (11) able to turn one with respect to the other about an axis (15), the pulley (11) being situated around the shaft (14), including disengageable means (36, 37, 38, 39, 40, 41, 42, 43) for driving the shaft (14) by the pulley (11) permitting the driving or non-driving of the shaft (14) by the pulley (11) according to the rotation speed of the latter, the disengageable means including:
• a clutch (36, 37) permitting the coupling of the shaft (14) with respect to the pulley (11) under the effect of a coupling force,
• several inertial masses (40, 41, 42, 43) able to move radially with respect to the axis (15) on the rotation of the pulley (11) and generating the coupling force,
**characterized in that** the disengageable driving means further include hysteresis generating means in the coupling and uncoupling of the clutch, such that the predefined coupling rotation speed is different from the predefined uncoupling rotation speed.

2. The coupling device according to Claim 1, **characterized in that** the hysteresis generating means comprise one permanent magnet per inertial mass, the said magnets being arranged so as to return the inertial masses towards the shaft (14).

3. The device according to Claim 2, **characterized in that** the permanent magnets are integral with the pulley (11), with the inertial masses comprising a ferromagnetic material.

4. The device according to Claim 2, **characterized in that** the permanent magnets are integral with the inertial masses, a ferromagnetic element being arranged close to a hub of the pulley (11).

5. The device according to Claim 1, **characterized in that** the hysteresis generating means comprise at least one electromagnet, arranged so as to return the inertial masses towards the shaft (14) when they are activated.

6. The device according to Claim 5, **characterized in that** it comprises at least one electromagnet arranged so as to act on the inertial masses (40, 41, 42, 43) comprising a ferromagnetic material.

7. The device according to Claim 5, **characterized in that** it comprises at least one electromagnet arranged so as to act on a pusher plate (39) intercalated between the inertial masses and the clutch, the said pusher plate (39) comprising a ferromagnetic material.

8. The device according to Claim 1, **characterized in that** the hysteresis generating means comprise a first shoulder (401) realized on the inertial masses (40, 41, 42, 43), the first shoulder (401) resting on a second corresponding shoulder of an element of the pulley (11), so as to generate a return force of the masses towards the shaft (14) during a radial displacement of the inertial masses (40, 41, 42, 43).

9. The device according to Claim 1, in which the coupling force is axial and transmits inertial masses (40, 41, 42, 43) towards the clutch (36, 37) by means of a pusher plate (39), **characterized in that** the hysteresis generating means comprise a first shoulder (401) realized on the inertial masses (40, 41, 42, 43), the first shoulder (401) resting on a second corresponding shoulder of the pusher plate (391) so as to generate a return force of the masses towards the shaft (14) during a radial displacement of the inertial masses (40, 41, 42, 43).

10. The coupling device according to one of the preceding claims, **characterized in that** the clutch (36, 37) is conical.

11. The coupling device according to Claim 10, **characterized in that** the clutch (36, 37) includes several friction cones (30 to 35) distributed in two alternate sets (36, 37), a first set (36) being linked in rotation to the pulley (11) and a second set (37) being linked in rotation to the shaft (14).

12. An engine block able to equip a motor vehicle and including a heat engine, a reversible alternator (12) permitting the starting of the heat engine and the generation of electrical energy, an accessory (13), the heat engine and the reversible alternator (12) being able to drive the accessory (13) in rotation by means of a belt (10), **characterized in that** it includes a coupling device according to one of the preceding claims between an output shaft (14) of the heat engine and a pulley (11) driven by the belt (10).

13. The engine block according to Claim 12, **characterized in that** the accessory is an air-conditioning unit (13).

## Patentansprüche

1. Kupplungsvorrichtung zwischen einer Welle (14) und einer Rolle (11), die zueinander um eine Achse (15) drehen können, wobei die Rolle (11) um die Welle (14) liegt, die ausrückbare Mittel (36, 37, 38, 39, 40, 41, 42, 43) zum Antreiben der Welle (14) durch die Rolle (11), die das Antreiben oder nicht der Welle (14) durch die Scheibe (11) in Abhängigkeit von der Drehzahl dieser Letzteren erlauben, aufweist, wobei die ausrückbaren Antriebsmittel aufweisend:
• eine Kupplung (36, 37), die das Kuppeln der Welle (14) in Bezug zu der Rolle (11) unter der Einwirkung einer Kupplungskraft erlaubt,
• mehrere Trägheitsmassen (40, 41, 42, 43), die sich radial in Bezug zu der Achse (15) bei der Drehung der Rolle (11) verlagern können und die Kupplungskraft erzeugen,
**dadurch gekennzeichnet, dass** die ausrückbaren Antriebsmittel ferner Mittel zum Erzeugen von Hysterese in dem Kuppeln und Auskuppeln der Kupplung aufweisen, so dass die vordefinierte Kupplungsdrehzahl von der vordefinierten Auskuppeldrehzahl unterschiedlich ist.

2. Kupplungsvorrichtung nach Anspruch 1, **dadurch gekennzeichnet, dass** die Mittel zum Erzeugen von Hysterese einen Dauermagnet durch Trägheitsmasse aufweisen, wobei die Magnete derart angeordnet sind, dass sie die Trägheitsmassen zu der Welle (14) zurückbringen.

3. Vorrichtung nach Anspruch 2, **dadurch gekennzeichnet, dass** die Dauermagnete fest mit der Rolle (11) verbunden sind, wobei die Trägheitsmassen einen ferromagnetischen Werkstoff aufweisen.

4. Vorrichtung nach Anspruch 2, **dadurch gekennzeichnet, dass** die Dauermagnete fest mit Trägheitsmassen verbunden sind, wobei ein ferromagnetisches Element in der Nähe einer Nabe der Rolle (11) angeordnet ist.

5. Vorrichtung nach Anspruch 1, **dadurch gekennzeichnet, dass** die Mittel zum Erzeugen von Hysterese wenigstens einen Elektromagnet aufweisen, der derart angeordnet ist, dass er die Trägheitsmassen zu der Welle (14), wenn sie aktiviert sind, zurückbringt.

6. Vorrichtung nach Anspruch 5, **dadurch gekennzeichnet, dass** sie wenigstens einen Elektromagnet aufweist, der derart angeordnet ist, dass er auf die Trägheitsmassen (40, 41, 42, 43), die ein ferromagnetisches Material aufweisen, einwirkt.

7. Vorrichtung nach Anspruch 5, **dadurch gekennzeichnet, dass** sie wenigstens einen Elektromagnet aufweist, der derart angeordnet ist, dass er auf eine Schubplatte (39) einwirkt, die zwischen die Trägheitsmassen und die Kupplung eingefügt ist, wobei die Schubplatte (39) ein ferromagnetisches Material aufweist.

8. Vorrichtung nach Anspruch 1, **dadurch gekennzeichnet, dass** die Mittel zum Erzeugen von Hysterese einen ersten Ansatz (401) aufweisen, der auf den Trägheitsmassen (40, 41, 42, 43) hergestellt ist, wobei der erste Ansatz (401) auf einem zweiten entsprechenden Ansatz eines Elements der Rolle (11) derart aufliegt, dass eine Rückholkraft der Massen zu der Welle (14) im Laufe einer radialen Verlagerung der Trägheitsmassen (40, 41, 42, 43) erzeugt wird.

9. Vorrichtung nach Anspruch 1, bei der die Kupplungskraft axial ist und von den Trägheitsmassen (40, 41, 42, 43) zu der Kupplung (36, 37) mittels einer Schubplatte (39) übertragen wird, **dadurch gekennzeichnet, dass** die Mittel zum Erzeugen von Hysterese einen ersten Ansatz (401) aufweisen, der auf den Trägheitsmassen (40, 41, 42, 43) hergestellt ist, wobei der erste Ansatz (401) auf einem entsprechenden zweiten Ansatz der Schubplatte (391) derart aufliegt, dass eine Rückholkraft der Massen zu der Welle (14) während einer radialen Verlagerung der Trägheitsmassen (40, 41, 42, 43) erzeugt wird.

10. Kupplungsvorrichtung nach einem der vorhergehenden Ansprüche, **dadurch gekennzeichnet, dass** die Kupplung (36, 37) kegelförmig ist.

11. Kupplungsvorrichtung nach Anspruch 10, **dadurch gekennzeichnet, dass** die Kupplung (36, 37) mehrere Reibungskegel (30 bis 35), die in zwei abwechselnden Einheiten (36, 37) verteilt sind, aufweist, wobei eine erste Einheit (36) in Drehung mit der Rolle (11) verbunden ist, und eine zweite Einheit (37) in Drehung mit der Welle (14) verbunden ist.

12. Motorblock, der ein Kraftfahrzeug ausrüsten kann und einen Verbrennungsmotor, eine umkehrbare Lichtmaschine (12), die das Anlassen des Verbrennungsmotors und das Erzeugen elektrischer Energie erlaubt, ein Zubehör (13) aufweist, wobei der Verbrennungsmotor und die umkehrbare Lichtmaschine (12) das Zubehör (13) in Drehung mittels eines Riemens (10) antreiben können, **dadurch gekennzeichnet, dass** er eine Kupplungsvorrichtung nach einem der vorhergehenden Ansprüche zwischen einer Ausgangswelle (14) des Verbrennungsmotors und einer Rolle (11), die von dem Riemen (10) angetrieben wird, aufweist.

13. Motorblock nach Anspruch 12, **dadurch gekennzeichnet, dass** das Zubehör ein Klimaanlagenaggregat (13) ist.
